# FASCICULE DE BREVET EUROPEEN

(11) **EP 2 611 514 B1**
(45) Date de publication et mention de la délivrance du brevet: **20.04.2016**
(21) Numéro de dépôt: 11764817.0
(22) Date de dépôt: 31.08.2011
(51) Int. Cl.: B01D 25/26

(54) **FILTRE A DECOLMATAGE AUTOMATIQUE.**
FILTER MIT AUTOMATISCHER OBSTRUKTIONSBESEITIGUNG
FILTER WITH AUTOMATIC DECLOGGING

(30) Priorité: 03.09.2010 FR 1057029
(43) Date de publication de la demande: 10.07.2013
(73) Titulaire: Alfa Laval Moatti, 78990 Elancourt (FR)
(72) Inventeur: CHRUPALLA, Jean-Claude, F-95490 Vaureal (FR)
(74) Mandataire: Alfa Laval Attorneys
(86) Numéro de dépôt international: PCT/FR2011/051991
(87) Numéro de publication internationale: WO 2012/028824

(56) Documents cités:
- CH-A- 386 989
- FR-A1- 2 902 024
- US-A1- 2003 089 657

## Description

L'invention se rapporte à un filtre à décolmatage automatique du type comprenant au moins une paire d'éléments filtrants, essentiellement annulaires et plats, munis de tamis, empilés selon un axe. Elle concerne plus particulièrement l'agencement des moyens de décolmatage automatique desdits tamis.

Le brevet français publié sous le n° 2 779 359 décrit une structure de filtre utilisant des éléments filtrants plats, annulaires, comportant chacun une face dite interne, une face dite externe et un tamis. Le tamis, annulaire, s'étend entre deux bordures circulaires concentriques, respectivement intérieure et extérieure. Des nervures radiales, régulièrement réparties circonférentiellement et s'étendant en vis-à-vis de part et d'autre du tamis entre lesdites bordures concentriques permettent de former des secteurs sur la face interne et sur la face externe. De tels éléments filtrants sont destinés à être assemblés l'un contre l'autre de façon que leurs faces internes, en regard, définissent un espace compartimenté radialement par les nervures radiales en contact desdites faces internes. Des passages sont ménagés, pour chaque secteur, sur les bordures intérieure et extérieure. En empilant un nombre choisi de paires d'éléments filtrants, on obtient la surface de filtrage souhaitée pour l'application envisagée. Typiquement, le fluide à filtrer pénètre dans l'empilement par les passages situés radialement à l'intérieur, traverse les tamis, pénètre, purifié dans les différents espaces définis ci-dessus et ressort par les passages définis radialement à l'extérieur. Bien entendu, la circulation du fluide entre les tamis pourrait être inversée ou agencée différemment.

Dans ce dispositif antérieur connu, on met en oeuvre un décolmatage par contre-courant utilisant le fluide propre disponible, sous pression, à la sortie du filtre. Par exemple, un distributeur est monté axialement dans l'empilement et entraîné en rotation. Il comporte une embouchure longitudinale susceptible d'entrer en communication avec tous les passages définis sur les bordures intérieures le long d'une même génératrice de l'empilement annulaire. Ce distributeur est en communication avec une sortie d'évacuation du fluide chargé des impuretés provenant du décolmatage, secteur par secteur. Lors de la rotation du distributeur, les secteurs se trouvent isolés les uns après les autres et ne reçoivent plus de fluide à nettoyer. Au contraire, une fraction du fluide qui vient d'être nettoyé pénètre à contre-courant dans le secteur isolé, (qui s'étend sur toute la hauteur de l'empilement) et provoque le décolmatage des parties de tamis délimitées par ces secteurs.

Le fluide véhiculant les impuretés résultant du décolmatage peut être traité par un second étage de filtration ou par un système centrifuge. Des purges périodiques permettent de débarrasser le système de ces impuretés.

La structure de filtrage décrite ci-dessus nécessite un distributeur rotatif s'étendant axialement sur la totalité de l'empilage des éléments filtrants. Sa longueur dépend donc de la taille du filtre, ce qui est un obstacle à la baisse du prix de revient d'un tel filtre.

Le document FR 2 902 024 propose un autre type de distributeur rotatif en associant à chaque élément filtrant des tronçons de canaux longitudinaux jouxtant l'une desdites bordures intérieure ou extérieure et communicant respectivement avec les passages de celle-ci.

L'empilement des éléments filtrants définit ainsi un ensemble de colonnes de distribution parallèles s'étendant côte à côte circonférentiellement suivant des directions parallèles à l'axe dudit empilement. Un distributeur rotatif de décolmatage est monté en rotation à une extrémité de l'empilement de façon que son embouchure soit périodiquement et sélectivement mise en communication avec chaque colonne de distribution.

Cette solution donne satisfaction pour des éléments filtrants de petite dimension. Cependant, un tel élément filtrant comporte, comme on sait, des nervures radiales et circonférentielles surmoulées sur un tamis de filtrage. Les tronçons de canaux doivent être réalisés au cours de la même opération. On a constaté qu'il était difficile d'injecter le matériau constituant ces nervures et les tronçons de canaux associés pour réaliser des éléments filtrants de grande dimension.

L'invention permet notamment de résoudre ce problème.

Plus particulièrement, l'invention concerne un filtre tel que défini dans la revendication 1.

Avantageusement lesdits conduits sont matérialisés par des ailettes régulièrement réparties circonférentiellement et s'étendant dans des plans passant par un axe longitudinal dudit filtre.

Le nombre d'ailettes est égal au nombre de nervure radiales que comporte un tel élément filtrant.

L'élément filtrant, de structure classique, c'est-à-dire dépourvu des tronçons de canaux décrits ci-dessus, est plus facile à fabriquer notamment en réalisant une injection de matière par le centre. On réduit aussi notablement la longueur des surfaces assurant l'étanchéité entre les canaux, ce qui réduit sensiblement les fuites.

Selon un mode de réalisation, ledit répartiteur est agencé à l'intérieur de l'empilement des disques constituants les éléments filtrants, c'est-à-dire que de tels éléments filtrants, réunis par paires, sont assemblés autour du répartiteur.

Plus particulièrement, le filtre selon l'invention est avantageusement caractérisé en ce que ledit répartiteur est constitué par des ailettes précitées rattachées à un noyau cylindrique axial, les bords desdites ailettes étant en contact avec la surface cylindrique intérieure dudit empilement d'élément filtrant de sorte que chaque colonne de distribution est délimitée par deux ailettes adjacentes et la surface intérieure de l'empilement et communique avec les passages de la bordure intérieure desdites faces externes des éléments filtrants s'étendant suivant une direction commune parallèle audit axe longitudinal.

Avantageusement, le filtre est en outre caractérisé en ce que chaque bord libre d'une ailette comporte une bande s'étendant longitudinalement et présentant une surface extérieure cylindrique de rayon de courbure identique à celui de la surface cylindrique intérieure dudit empilement, contre laquelle il s'applique.

Il est à noter que le répartiteur à ailettes tel que défini est une pièce facile à réaliser. Il s'agit d'une forme profilée à profil constant qui peut être obtenue en grande longueur, par exemple par extrusion. Ceci réduit notablement les coûts. La longueur du répartiteur peut être ajustée en fonction de celle du filtre en coupant simplement un tronçon d'un tel profilé à la longueur appropriée.

Avantageusement, le distributeur est entraîné par un moteur hydraulique. Ce moteur hydraulique peut être alimenté par le fluide filtré lui-même.

Selon une autre caractéristique avantageuse, le filtre est caractérisé en ce que la ou les paire(s) d'éléments filtrants empilés axialement sont serrées entre un couvercle et une entretoise de distribution, en ce que ladite entretoise de distribution comporte des passages prolongeant lesdites colonnes de distribution et débouchant sur une surface annulaire de celui-ci et en ce que ledit distributeur rotatif comporte un canal d'évacuation relié à ladite embouchure, laquelle est définie sur une surface dudit distributeur en contact étanche et glissant avec ladite surface annulaire ladite entretoise de distribution où débouchent lesdits passages.

L'embouchure se situe entre deux parties d'obturation de ladite surface dudit distributeur. Ceci permet d'isoler une partie du filtre avant son décolmatage pendant que la partie adjacente fait l'objet du décolmatage. On évite ainsi tout mélange entre fluide propre et fluide de décolmatage.

L'invention sera mieux comprise et d'autres avantages de celle-ci apparaîtront plus clairement à la lumière de la description qui va suivre, donnée uniquement à titre d'exemple et faite en référence aux dessins annexés dans lesquels :
- la figure 1 est une vue en plan de la face dite interne d'un élément filtrant entrant dans la constitution d'un filtre conforme à l'invention ;
- la figure 2 est une vue en plan de la face dite externe du même élément filtrant ;
- la figure 3A est une vue en perspective montrant l'assemblage de deux éléments filtrants ;
- la figure 3B est une vue en perspective montrant les deux éléments filtrants assemblés ;
- la figure 4 est une vue en perspective éclatée de la partie principale du filtre ;
- la figure 5 est une vue en coupe d'un filtre complet ;
- la figure 6 est une vue de dessous du distributeur ;
- les figures 7 à 9 sont des vues schématiques illustrant le décolmatage automatique par rotation continue du distributeur ;
- les figures 10A et 10B sont des vues en perspective extérieure d'une variante; et
- la figure 11 illustre une variante du distributeur fixe.

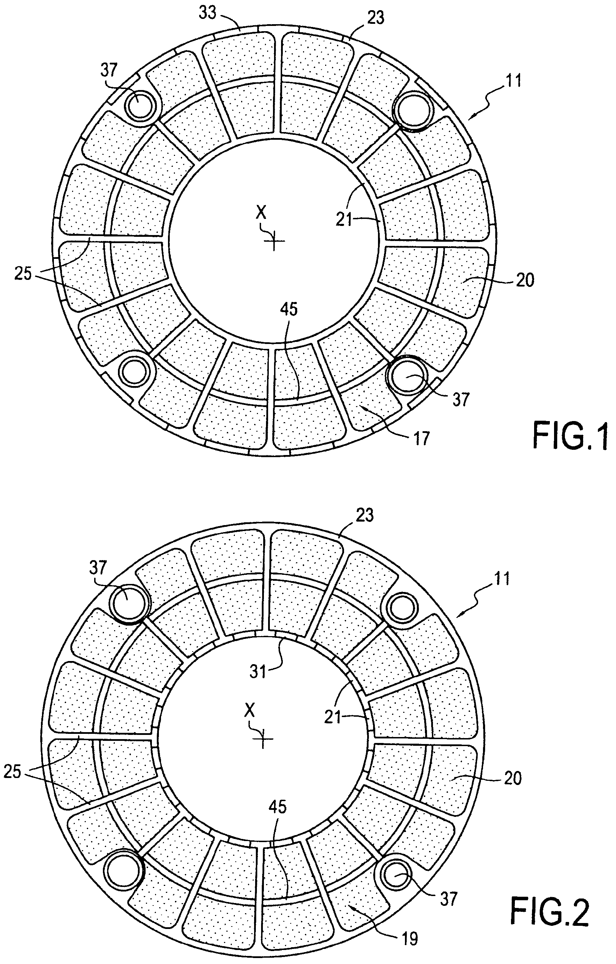

En considérant plus particulièrement les figures 1 à 3, un élément filtrant 11 entrant dans la constitution d'un filtre 15 ou 115 conforme à l'invention a une forme générale annulaire plate, d'axe x. Il comporte une face 17 dite interne, une face 19 dite externe, un tamis annulaire 20 et deux bordures circulaires concentriques, respectivement une bordure intérieure 21 et une bordure extérieure 23 entre lesquelles s'étend ledit tamis. Les deux bordures 21, 23 s'étendent de part et d'autre du plan du tamis. L'élément filtrant comporte également des nervures radiales 25, régulièrement réparties circonférentiellement et s'étendant en vis-à-vis de part et d'autre du tamis. Ces nervures radiales 25 s'étendent d'une bordure circulaire à l'autre pour former des secteurs sur ladite face interne et sur ladite face externe. Les bordures circulaires 21, 23 ont la même hauteur, axialement, que les paires de nervures radiales 25 qui s'étendent en vis-à-vis de part et d'autre du tamis 20. En conséquence, lorsqu'on assemble au moins deux éléments filtrants 11 de ce type, l'un contre l'autre de façon que lesdites faces internes soient en regard l'une de l'autre, on définit un espace 27 compartimenté radialement par les nervures radiales 25 en contact, desdites faces internes. Dans l'exemple, le ou chaque espace 27 est traversé par du fluide purifié, les impuretés étant retenues par les deux tamis 20 du côté des faces externes.

Comme visible sur les dessins, la bordure extérieure 23 de chaque élément filtrant comporte des passages 33 communiquant respectivement avec les secteurs des faces internes tandis que la bordure intérieure 21 de ce même élément filtrant comporte des passages 31 communiquant respectivement avec les secteurs des faces externes. Plus particulièrement, ces passages sont matérialisés par des encoches découpées dans lesdites bordures extérieure ou intérieure, d'un côté ou de l'autre du plan du tamis.

Des trous 37 pour le passage de tiges d'assemblages, typiquement des tiges filetées, sont définis au voisinage de la bordure extérieure 23 de chaque élément filtrant et délimités par moulage du même matériau qui définit les bordures circulaires et nervures radiales.

Des oeillets mâles 39 et des oeillets femelles 40 sont agencés autour de ces trous, pour l'indexage de deux éléments filtrants l'un par rapport à l'autre.

Dans l'exemple non limitatif représenté, chaque élément filtrant 11 est divisé en seize secteurs et comporte quatre trous à oeillet régulièrement espacées circonférentiellement.

De chaque côté du tamis, une nervure circulaire 45, d'épaisseur inférieure à celle des nervures radiales, s'étend entre lesdites bordures intérieure et extérieure. Cette nervure contribue à rigidifier l'élément filtrant.

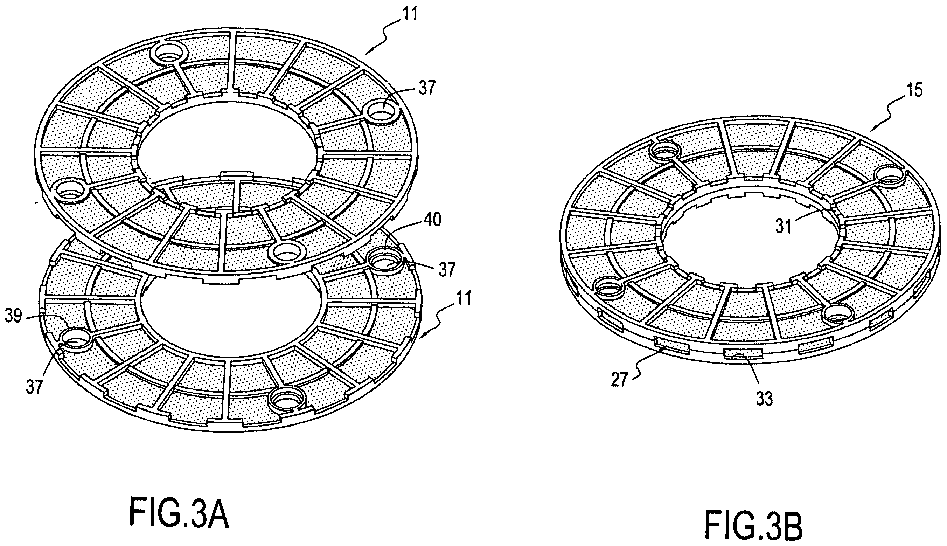

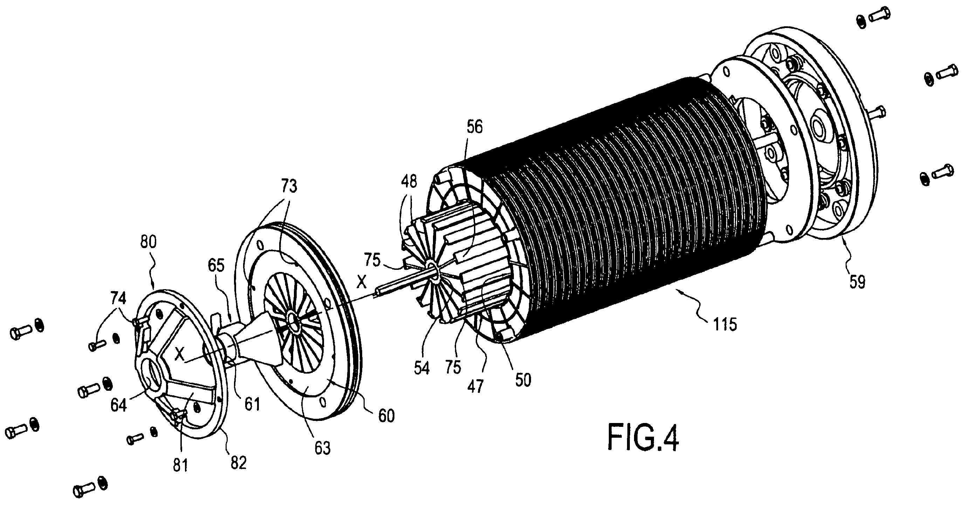

Un filtre 15 est réalisé par l'assemblage d'au moins deux éléments filtrants 11 comme représenté à la figure 3B. Pour obtenir un filtre 115 (voir figure 4) d'une capacité de filtrage voulue, il suffit d'empiler et assembler un nombre voulu de filtres élémentaires 15 comme celui de la figure 3B.

Les éléments filtrants 11 sont réalisés par moulage incluant le tamis annulaire dans un plan médian. La partie moulée peut être en métal (par exemple un alliage d'aluminium) ou en matière plastique. Les nervures et bordures peuvent être revêtues d'élastomère pour éviter les fuites entre éléments filtrants.

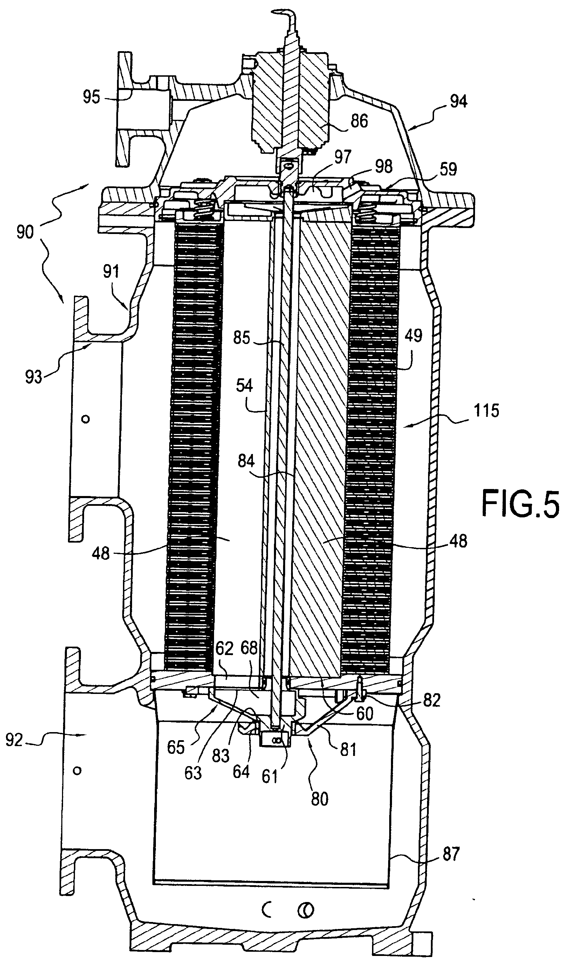

Comme on le voit sur les figures 4 et 5, les paires d'éléments filtrants sont empilées axialement et serrées entre un couvercle 59 et une entretoise de distribution 60. Un répartiteur 47, fixe, comprenant des ailettes planes 48 régulièrement réparties circonférentiellement et s'étendant dans des plans passant par l'axe longitudinal x, commun, de tous les éléments filtrants (constituant le filtre proprement dit) est disposée coaxialment à cet empilement 49 c'est-à-dire plus particulièrement ici agencé à l'intérieur de l'espace cylindrique délimité par l'ensemble des bordures intérieures 31 de tous les éléments filtrants. Ce répartiteur définit avec l'empilement 49 un ensemble de seize colonnes de distribution 50, c'est-à-dire un nombre correspondant au nombre de secteurs définis dans les éléments filtrants.

Chaque colonne de distribution 50 est donc délimitée entre deux ailettes adjacentes et une portion de la surface cylindrique interne de l'empilement.

Plus précisément, les ailettes 48 sont rattachées à un noyau cylindrique axial 54 et les bords de ces ailettes sont en contact avec la surface cylindrique intérieure de l'empilement 49 d'éléments filtrants.

Chaque colonne de distribution communique avec les passages 31 de la bordure intérieure des faces externes des éléments filtrants s'étendant suivant une direction commune parallèle à l'axe longitudinal x.

Ces passages constituent toutes les entrées des filtres élémentaires de l'empilement 49 correspondant à un même secteur angulaire du filtre, susceptible d'être isolé pour subir une opération de décolmatage par inversion de circulation du liquide filtré.

Avantageusement, le bord libre de chaque ailette 48 comporte une bande 56 s'étendant longitudinalement et présentant une surface extérieure cylindrique de rayon de courbure identique à celui de la surface cylindrique intérieure de l'empilement 49. Cette bande s'applique contre l'empilement, ce qui améliore l'étanchéité entre les colonnes de distribution 50.

L'entretoise de distribution 60 comporte des passages 62, en secteurs, prolongeant lesdites colonnes de distribution 50. Ces passages débouchent sur une surface extérieure 63 de l'entretoise. Celle-ci comporte des trous 73 pour le passage de vis 74 qui, au montage, sont positionnées en regard de trous borgnes 75 taraudés ménagés aux extrémités de certaines ailettes 48. De cette façon, le répartiteur est fixé par vissage à la face interne de l'entretoise de distribution 60, ce qui réalise la mise en correspondance des espaces inter-ailettes donc des colonnes de distribution 50avec les passages 62 correspondants.

Par ailleurs, un distributeur rotatif de décolmatage 65, comportant une embouchure 66, est monté en rotation contre la face extérieure de l'entretoise de distribution 60, de façon que ladite embouchure 66 soit périodiquement et successivement mise en communication avec lesdites colonnes de distribution 50.

L'embouchure 66 est définie sur une surface plane du distributeur qui est en contact glissant avec la surface 63 correspondante, plane, de l'entretoise de distribution où débouchent les passages de celle-ci. Le distributeur rotatif 65 comporte un canal d'évacuation 68 relié à ladite embouchure.

Le distributeur 65 comporte un axe 61, cylindrique, engagé dans un palier de guidage 64 cylindrique central d'un support 80 comportant des bras 81 s'étendant entre ledit palier 64 et une couronne 82 fixée à la périphérie de l'entretoise de distribution 60. Ce support 80 assure le centrage du distributeur 65 par rapport au filtre. Un ressort (sous forme d'une rondelle ondulée) est interposé entre le palier et un épaulement du distributeur pour appliquer ce dernier à la surface de l'entretoise de distribution.

Le noyau cylindrique 54 comporte un canal d'axe x. Le conduit interne 84 qu'il définit ainsi est traversé par une tige d'entrainement 85 axiale reliant l'arbre d'un moteur hydraulique 86 au distributeur rotatif de décolmatage 65. Une crépine 87 destinée à retenir les résidus les plus volumineux, est fixée à l'extérieur de l'entretoise de distribution 60 et abrite aussi le distributeur 65.

Le sous-ensemble qui vient d'être décrit est logé dans un carter 90 en deux parties, assemblées par brides, à savoir un corps 91 dans lequel est ménagé une entrée 92 et une sortie 93 pour le liquide à traiter et un chapeau 94 dans lequel se trouve ménagée une sortie 95 pour le liquide de décolmatage. Ce chapeau 94 porte aussi axialement le moteur hydraulique 86, connecté à une extrémité de la tige d'entrainement 85. Le couvercle 59 de l'empilement est composé de deux parties assemblées coaxialement définissant entre elles une chambre annulaire 97 en communication avec l'espace intérieur du chapeau, par des perçages obliques 98 et avec le conduit interne 84 défini dans le canal du répartiteur. La liaison entre le moteur hydraulique et la tige traverse, avec étanchéité, le couvercle 59.

Le distributeur 65 est monté axialement en rotation à l'extrémité correspondante du conduit interne 84. Le fluide à nettoyer pénètre dans l'empilement 49 via les passages 62 définis dans l'entretoise de distribution 60.

Le liquide à nettoyer est introduit par l'entrée 92 du corps, traverse la crépine 87 et pénètre dans les colonnes de distribution 50 (entre les ailettes) qui ne sont pas isolées par le distributeur de décolmatage 65. Le liquide ressort purifié à l'extérieur de l'empilement et est évacué par la sortie 93 du corps 91. Pendant ce temps, le distributeur de décolmatage 65 est entrainé lentement en rotation par le moteur 86.

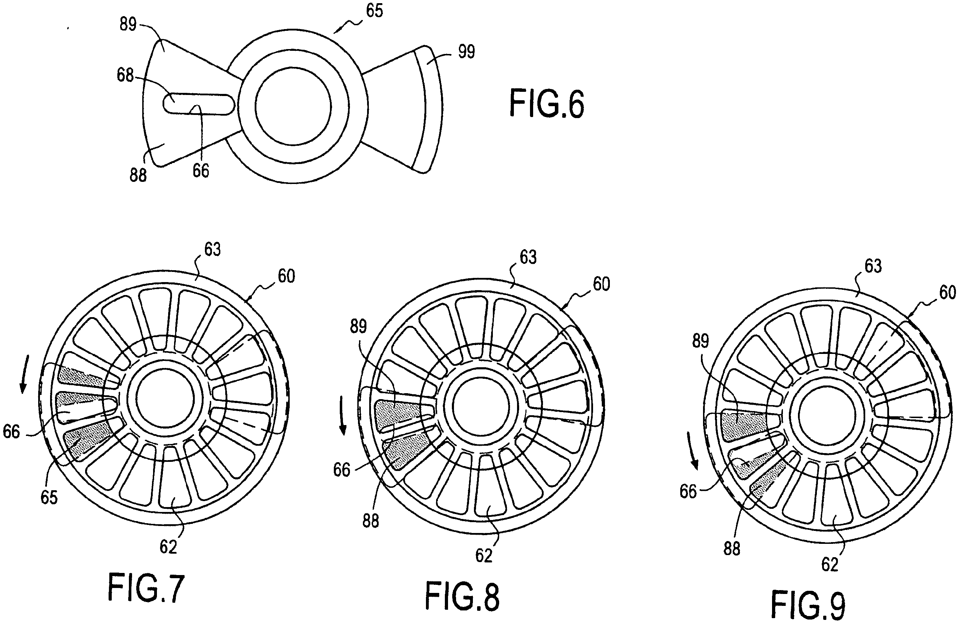

Comme on le voit sur la figure 6, l'embouchure 66 du distributeur qui communique avec les passages 62 de l'entretoise de distribution, se situe entre deux zones d'obturation 88, 89 de la surface plane qui prend appui à la surface de l'entretoise de distribution. Dans l'exemple, l'embouchure 66 a un contour en forme de fente radiale. Le distributeur comporte aussi une surface d'appui marginale 99 diamétralement opposée à ladite surface plane mais ne prenant appui sur l'entretoise que radialement à l'extérieur des orifices des passages 62 de celles-ci. Le canal d'évacuation 68 du distributeur communique en permanence avec le conduit axial 84 du répartiteur.

Les figures 7 à 9 illustrent la mise en communication entre le distributeur 65 et les différents secteurs du filtre.

Dans la position de la figure 7, seul un secteur est en communication avec l'embouchure 66. Les secteurs adjacents sont partiellement isolés mais le fluide impur continue à circuler dans ceux-ci tandis que du fluide pur circule à contre-courant dans le secteur en communication avec le distributeur, ce qui provoque le décolmatage des fractions de tamis correspondantes.

Sur la figure 8 on voit que lorsque l'embouchure 66 passe d'un secteur à l'autre, les deux secteurs adjacents sont isolés par lesdites zones d'obturation 88, 89. Sur la figure 9, le secteur suivant est pleinement en communication avec le distributeur, le secteur précédent commence à être remis en communication avec le fluide à nettoyer et le secteur adjacent à celui qui est en cours de décolmatage commence à être isolé. Ainsi, la configuration du distributeur empêche tout mélange entre le fluide de décolmatage et le fluide filtré.

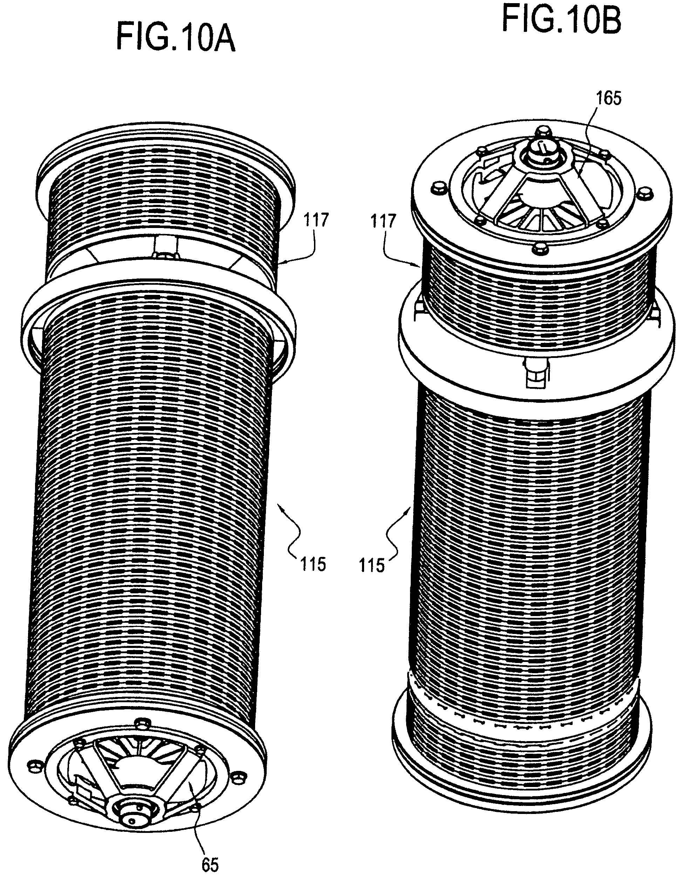

Les figures 10A, 10B illustrent une variante selon laquelle, avantageusement, un filtre principal 115 tel que décrit ci-dessus est prolongé par un filtre auxiliaire 117 de plus petite capacité et agencé pour recevoir le liquide ayant servi au décolmatage des secteurs du filtre principal. Ce filtre auxiliaire reçoit donc par l'intérieur le liquide impur issu du décolmatage. Celui-ci une fois filtré s'écoule à l'extérieur du filtre auxiliaire 117. Ce dernier peut aussi être muni d'un système de décolmatage automatique semblable à celui qui a été décrit précédemment. Dans ce cas, le sous-ensemble de filtrage tel qu'illustré comporte un distributeur rotatif 65, 165 à chaque extrémité d'un empilement comprenant le filtre principal 115 et le filtre auxiliaire 117. Les deux distributeurs sont entraînés par la même tige axiale, reliée à l'arbre du moteur hydraulique.

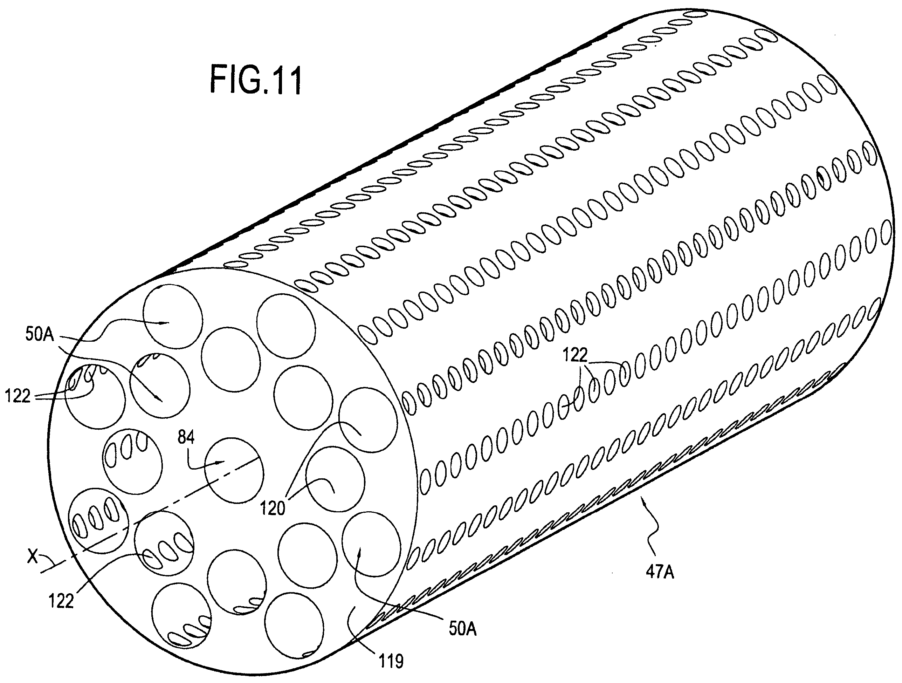

Le répartiteur peut avoir une forme différente de celle représentée sur la figure 4, pourvu qu'il assure la communication entre ledit distributeur rotatif et les passages définis à la surface de l'empilement d'éléments filtrants. Plus précisément, le répartiteur doit être pourvu de conduits distincts établissant chacun la communication entre un passage (de forme adaptée) d'une entretoise de distribution et un groupe de passages dudit empilement d'éléments filtrant alignés le long d'une génératrice. Le nombre de groupes correspond au nombre de secteurs définis dans les éléments filtrants superposés. Par exemple, si on considère le mode de réalisation de la figure 11, on voit que le répartiteur fixe 47A est défini dans un cylindre 119 de diamètre égal à celui de la surface cylindrique intérieure de l'empilement 49. Chaque colonne de distribution 50A comporte un conduit 120 parallèle à l'axe et une rangée de perçages 122 s'étendant radialement depuis la surface extérieure du cylindre 119 et débouchant dans le conduit 120. Chaque perçage d'une rangée est en regard d'un passage 31 défini à la surface intérieure de l'empilement d'éléments filtrants et correspondant à un même secteur angulaire du filtre.

## Revendications

1. Filtre comprenant au moins une paire d'éléments filtrants (11) plats comportant chacun une face (17) dite interne, une face (19) dite externe, un tamis (20), deux bordures circulaires concentriques, respectivement une bordure intérieure (21) et une bordure extérieure (23) entre lesquelles s'étend ledit tamis et des nervures radiales (25) régulièrement réparties circonférentiellement et s'étendant en vis-à-vis de part et d'autre dudit tamis et entre lesdites bordures concentriques pour former des secteurs sur ladite face interne et sur ladite face externe, lesdits deux éléments filtrants étant assemblés l'un contre l'autre de façon que lesdites faces internes, en regard, définissent un espace (27) compartimenté radialement par les nervures radiales en contact desdites faces internes, lesdites bordures extérieure et intérieure comportant des passages communicants respectivement avec les secteurs et comprenant en outre des colonnes de distribution parallèles s'étendant suivant une direction axiale et un distributeur rotatif de décolmatage (65) comportant une embouchure (66), ledit distributeur étant monté en rotation de façon que ladite embouchure soit périodiquement et sélectivement mise en communication avec chaque colonne de distribution, **caractérisé en ce qu'**il comprend un répartiteur (47, 47A) fixe, disposé coaxialement à un empilement d'éléments filtrants dudit filtre et comprenant des conduits distincts qui forment lesdites colonnes de distribution (50, 50A) et qui établissent respectivement la communication entre ledit distributeur rotatif, d'une part, et des passages précités dudit empilement, alignés le long de génératrices de celui-ci, d'autre part.

2. Filtre selon la revendication 1, **caractérisé en ce que** lesdits conduits sont matérialisés par des ailettes (48) régulièrement réparties circonférentiellement et s'étendant dans des plans passant par un axe (X) longitudinal dudit filtre.

3. Filtre selon la revendication 2, **caractérisé en ce que** ledit répartiteur (47) est constitué par des ailettes précitées rattachées à un noyau cylindrique axial (54), les bords desdites ailettes étant en contact avec la surface cylindrique intérieure dudit empilement (49) d'éléments filtrant de sorte que chaque colonne de distribution (50) est délimitée par deux ailettes (48) adjacentes et la surface intérieure de l'empilement et communique avec les passages de la bordure intérieure desdites faces externes des éléments filtrants s'étendant suivant une direction commune parallèle audit axe longitudinal.

4. Filtre selon la revendication 3, **caractérisé en ce que** chaque bord libre d'une ailette (48) comporte une bande (56) s'étendant longitudinalement et présentant une surface extérieure cylindrique de rayon de courbure identique à celui de la surface cylindrique intérieure dudit empilement, contre laquelle il s'applique.

5. Filtre selon l'une des revendications précédentes, **caractérisé en ce que** la ou les paires d'éléments filtrants empilés axialement sont serrés entre un couvercle (59) et une entretoise de distribution (60) **en ce que** ladite entretoise de distribution comporte des passages (62) prolongeant lesdites colonnes de distribution et débouchant sur une surface de celle-ci et **en ce que** ledit distributeur rotatif comporte un canal d'évacuation (68) relié à ladite embouchure (66), laquelle est définie sur une surface dudit distributeur en contact glissant avec ladite entretoise de distribution, ledit canal d'évacuation communicant avec une sortie d'évacuation de liquide de décolmatage.

6. Filtre selon la revendication 5, **caractérisé en ce que** ladite embouchure (66) se situe entre deux zones d'obturation (88, 89) de ladite surface dudit distributeur.

7. Filtre selon l'une des revendications précédentes, **caractérisé en ce qu'**il comporte un filtre principal (115) et un filtre auxiliaire (117) agencé pour recevoir le liquide ayant servi au décolmatage dudit filtre principal.

8. Filtre selon la revendication 7, **caractérisé en ce que** ledit filtre auxiliaire comporte un autre distributeur rotatif de décolmatage (165) semblable au distributeur rotatif de décolmatage (65) dudit filtre principal.

9. Filtre selon la revendication 8, **caractérisé en ce que** les deux distributeurs rotatifs de décolmatage sont respectivement installés aux deux extrémités d'un empilement comprenant ledit filtre principal et ledit filtre auxiliaire.

## Patentansprüche

1. Filter, das wenigstens ein Paar flache Filterelemente (11) umfasst, die jeweils Folgendes umfassen: eine innere Fläche (17), eine äußere Fläche (19), ein Sieb (20), zwei konzentrische kreisförmige Einfassungen, jeweils eine innere Einfassung (21) und eine äußere Einfassung (23), zwischen denen das Sieb verläuft, und radiale Rippen (25), die gleichmäßig um den Umfang verteilt sind und einander gegenüberliegend auf beiden Seiten des Siebs und zwischen den konzentrischen Einfassungen verlaufen, um Sektoren auf der innere Fläche und der äußeren Fläche zu bilden, wobei die beiden Filterelemente so aneinandergefügt sind, dass die inneren gegenüberliegenden Flächen einen Raum (27) definieren, der radial durch die radialen Rippen in Kontakt mit den Innenflächen unterteilt ist, wobei die äußere und innere Einfassung Passagen umfassen, die jeweils mit den Sektoren in Verbindung sind, und ferner parallele Spendespalten umfassen, die in einer axialen Richtung verlaufen, und einen rotatorischen Verstopfungsbeseitigungsspender (65) mit einer Mündung (66), wobei der Spender rotatorisch so montiert ist, dass die Mündung periodisch und selektiv mit jeder Spendespalte in Verbindung gebracht wird, **dadurch gekennzeichnet, dass** er einen festen Verteiler (47, 47A) aufweist, der koaxial auf einem Filterelementestapel des Filters angeordnet ist und getrennte Leitungen umfasst, die die Spendespalten (50, 50A) bilden und jeweils die Verbindung zwischen dem rotatorischen Spender einerseits und den vorerwähnten Passagen des Stapels andererseits, die entlang der Mantellinie davon fluchten, herstellen.

2. Filter nach Anspruch 1, **dadurch gekennzeichnet, dass** die Leitungen durch umfangsmäßig gleichmäßig verteilte Flügel (48) realisiert sind, die in durch eine Längsachse (X) des Filters passierenden Ebenen verlaufen.

3. Filter nach Anspruch 2, **dadurch gekennzeichnet, dass** der Verteiler (47) durch vorerwähnte Flügel gebildet wird, die an einer zylindrischen axialen Nabe (54) angebracht sind, wobei die Ränder der Flügel mit der zylindrischen Innenfläche des Filterelementestapels (49) so in Kontakt sind, dass jede Spendespalte (50) durch zwei benachbarte Flügel (48) und die Innenfläche des Stapels begrenzt wird und mit den Passagen der inneren Einfassung der Außenflächen der Filterelemente in Verbindung sind, die in einer gemeinsamen Richtung parallel zu der Längsachse verlaufen.

4. Filter nach Anspruch 3, **dadurch gekennzeichnet, dass** jeder freie Rand eines Flügels (48) einen Streifen (56) aufweist, der longitudinal verläuft und eine zylindrische Außenfläche mit einem Krümmungsradius aufweist, der mit dem der zylindrischen Innenfläche des Stapels identisch ist, an dem er anliegt.

5. Filter nach einem der vorherigen Ansprüche, **dadurch gekennzeichnet, dass** die ein oder mehreren axial gestapelten Filterelementepaare zwischen einem Deckel (59) und einem Verteilerabstandhalter (60) eingeschlossen sind, dadurch, dass der Verteilerabstandhalter Passagen (62) umfasst, die die Spendespalten verlängern und an einer Fläche desselben münden, und dadurch, dass der Drehspender einen Evakuationskanal (68) umfasst, der mit der Mündung (66) verbunden ist, die auf einer Fläche des Spenders in Gleitkontakt mit dem Verteilerabstandhalter definiert wird, wobei der Evakuationskanal mit einem Evakuationsausgang für Verstopfungsbeseitigungsflüssigkeit in Verbindung ist.

6. Filter nach Anspruch 5, **dadurch gekennzeichnet, dass** sich die Mündung (66) zwischen zwei Verschlusszonen (88, 89) der Oberfläche des Spenders befindet.

7. Filter nach einem der vorherigen Ansprüche, **dadurch gekennzeichnet, dass** es ein Hauptfilter (115) und ein Zusatzfilter (117) zum Aufnehmen der Flüssigkeit, die zum Beseitigen der Verstopfung des Hauptfilters benutzt wurde, umfasst.

8. Filter nach Anspruch 7, **dadurch gekennzeichnet, dass** das Zusatzfilter einen weiteren rotatorischen Verstopfungsbeseitigungsspender (165) ähnlich dem rotatorischen Verstopfungsbeseitigungsspender (65) des Hauptfilters umfasst.

9. Filter nach Anspruch 8, **dadurch gekennzeichnet, dass** die beiden rotatorischen Verstopfungsentfernungsspender jeweils an den beiden Enden eines Stapels installiert sind, der das Hauptfilter und das Zusatzfilter umfasst.

## Claims

1. A filter comprising at least one pair of flat filtering elements (11), each comprising an internal face (17), an external face (19), a screen (20), two concentric circular margins, respectively an inner margin (21) and an outer margin (23) between which said screen extends, and radial ribs (25) that are regularly distributed circumferentially and that extend facing one another on opposite sides of said screen and between said concentric margins in order to form sectors on said internal face and on said external face, said two filtering elements being assembled against each other in such a manner that said facing internal faces define a space (27) that is compartmented radially by the radial ribs contacting said internal faces, said inner and outer margins comprising passages communicating respectively with the sectors and also comprising parallel distribution columns extending along an axial direction, and a rotary declogging distributor (65) comprising an opening (66), said distributor being mounted to rotate so that said opening is periodically and selectively put into communication with each distribution column, **characterised in that** it comprises a fixed distributor (47, 47A) disposed coaxially to a stack of filtering elements of said filter and comprising distinct ducts which form said distribution columns (50, 50A) and which respectively establish communication between said rotary distributor, on the one hand, and the aforementioned passages of said stack that are in alignment along generatrices thereof, on the other hand.

2. The filter according to Claim 1, **characterised in that** said ducts are embodied by fins (48) that are regularly distributed circumferentially and that extend in planes passing via a longitudinal axis (X) of said filter.

3. The filter according to Claim 2, **characterised in that** said divider (47) is constituted by the aforementioned fins attached to an axial cylindrical core (54), the edges of said fins being in contact with the inner cylindrical surface of said stack (49) of filtering elements such that each distribution column (50) is defined by two adjacent fins (48) and by the inner surface of the stack, and communicates with the passages of the inner margin of said external faces of the filtering elements extending along a common direction parallel to said longitudinal axis.

4. The filter according to Claim 3, **characterised in that** each free edge of a fin (48) includes a strip (56) extending longitudinally and presenting a cylindrical outer surface having a radius of curvature identical to that of the inner cylindrical surface of said stack, and against which it bears.

5. The filter according to any of the preceding claims, **characterised in that** the pair(s) of axially stacked filtering elements is/are clamped between a cover (59) and a distribution spacer (60), **in that** said distribution spacer comprises passages (62) extending said distribution columns and opening out onto a surface thereof, and **in that** said rotary distributor comprises an exhaust channel (68) connected to said opening (66), which opening is defined on a surface of said distributor in sliding contact with said distribution spacer, said exhaust channel communicating with an exhaust outlet for declogging liquid.

6. The filter according to Claim 5, **characterised in that** said opening (66) is situated between two shutter portions (88, 89) of said surface of said distributor.

7. The filter according to any of the preceding claims, **characterised in that** it comprises a main filter (115) and an auxiliary filter (117) arranged to receive the liquid that has been used for declogging said main filter.

8. The filter according to Claim 7, **characterised in that** said auxiliary filter includes another rotary declogging distributor (165) similar to the rotary declogging distributor (65) of said main filter.

9. The filter according to Claim 8, **characterised in that** the two rotary declogging distributors are installed respectively at the two ends of a stack comprising said main filter and said auxiliary filter.
